# EUROPÄISCHE PATENTSCHRIFT

(11) **EP 0 656 515 B1**
(45) Veröffentlichungstag und Bekanntmachung des Hinweises auf die Patenterteilung: **04.08.1999**
(21) Anmeldenummer: 94115956.8
(22) Anmeldetag: 10.10.1994
(51) Int. Cl.: F26B 21/06, F26B 23/00

(54) **Verfahren zur Steuerung von Trocknern in Ziegelwerken**
Method for controlling dryers in brick factories
Procédé pour commander des sécheurs dans les manufactures de briques

(30) Priorität: 01.12.1993 DE 4340940
(43) Veröffentlichungstag der Anmeldung: 07.06.1995
(73) Patentinhaber: Innovatherm Prof. Dr. Leisenberg GmbH + Co. KG, D-35510 Butzbach (DE)
(72) Erfinder: Leisenberg, Wolfgang, Dr.-Ing. Prof., D-61231 Bad Nauheim (DE)
(74) Vertreter: Engelhardt, Guido, Dipl.-Ing.

(56) Entgegenhaltungen:
- WO-A-85/02249
- DE-C- 3 822 703
- FR-A- 2 582 644
- US-A- 1 499 227

## Beschreibung

Die Erfindung bezieht sich auf ein Verfahren zur Steuerung von Kammertrockner, der keramischen Industrie nach dem Oberbegriff des Anspruches 1.

Die Herstellung von grobkeramischen Produkten ist äußerst wärmeenergieintensiv. Die Minimierung der Prozeßwärme ist daher eine ökonomische und ökologische Forderung.

Aus der WO-A-85 02249 ist ein Kammertrockner mit einer Vielzahl von in Reihe geschalteten Kammern bekannt geworden, in denen gepreßte Ziegelsteine getrocknet werden sollen. Zu diesem Zweck weisen die Kammern ein unterschiedliches Temperaturniveau auf, in denen die zu trocknenden Ziegelsteine in Abhängigkeit von dem momentanen Trocknungsgrad der jeweiligen Ziegelsteine eingebracht und dort in einer bestimmten Kammer für eine vorzuwählende Zeiteinheit eingelagert werden.
Nach Ablauf dieser Zeiteinheit werden die Ziegelsteine in die nachfolgenden Kammern überführt, in denen der Trocknungsprozeß fortgesetzt wird.

Mit einem solchen Wärmetrocknungsprozeß ist demnach der Trocknungszustand jeder einzelnen Kammer individuell einstellbar und an den Trocknungsgrad der zu trocknenden Ziegelsteine anpaßbar.

Bei dem bekannten Kammertrocknern hat sich jedoch als nachteilig herausgestellt, daß ein sehr hoher Transportaufwand zur Beladung der einzelnen Kammern erforderlich ist, da die Formlinge mehrfach umgeladen werden müssen. Darüber hinaus verändert jede Neubeladung das thermodynamische Klima innerhalb der Kammer, da Umgebungsluft in die kammer einströmt, so daß nach jeder Neubeladung der entsprechende Wärmezustand in der Kammer erneut aufzubauen ist.
Dies führt jedoch zu einem unverhältnismäßig hohen Energieaufwand, um die Ziegelsteine in den einzelnen Kammern entsprechend eines optimalen Trocknungsprozeßes trocknen zu können.

Des weiteren herrscht zwischen Ofen und den einzelnen Kammern kein Wärmeverbund, so daß die Steuerung der Kammern lediglich auf die Einhaltung der für die Formlinge notwendigen Luftzustände ausgerichtet ist.
Die Trennung von Ofen und den Kammern führt zwangsläufig dazu, daß für jedes thermodynamische System, und zwar Ofen und Trockner, eine eigenständige Energiebilanz aufzustellen ist, so daß eine Optimierung der gesamten notwendigen Energie in bezug auf das gesamte System nicht durchführbar ist.

Ferner berücksichtigt das Verfahren nach dem Stand der Technik nicht die Konvektion in den Kammern, so daß auch hierdurch eine Optimierung der Energieleistung nicht erfolgt.

Es ist daher Aufgabe der Erfindung, ein Verfahren zur Steuerung von Trocknern in Ziegelwerken der eingangs genannten Art derart weiterzubilden, daß mit den vorgegebenen Randbedingungen eine automatische Optimierung des Wärmeverbrauchs zu erreichen ist, und daß dies nicht nur für den Trocknungsprozeß gesondert, sondern vielmehr für die Kombination des Brenn- und des Trocknungsprozeßes gilt.
Dies soll in einem Betrieb ohne große anlagentechnische Investitionen möglich sein, und zwar bei gleichzeitiger erheblicher Senkung der Energie- und Personalkosten.

Gemäß der Erfindung wird dies durch die im Anspruch 1 aufgeführten Verfahrensschritte erreicht.

Zweckmäßig ist es hierbei vorzusehen, daß das Verfahren gekennzeichnet ist durch:
- Berechnung des Austrocknungsprozeßes jeder Kammer, zumindest näherungsweise, an Hand eines empirischen oder physikalischmathematischen Modells des Trockenvorganges,
- Programmgesteuertes Erstellen eines energetisch optimierten Trocknungsprogrammes bei vorgegebener Ofenabwärme und Trockenzeit unter dem Gesichtspunkt eines minimalen Gesamtenergieaufwandes der Trocknung und/ oder des Gesamtwärmeverbundes von Tunnelofen und Trockner.

Bei einem vorgegebenen Produktionsprogramm ist es angebracht, zuerst den Verlauf des Energiebedarfs für den Trockner und über ein Modell des Tunnelofens den Verlauf des Energieangebotes des Tunnelofens vorauszuschätzen und daraufhin den Bedarf und das Angebot innerhalb der vom Betrieb vorgegebenen Produktionstermine anzupassen.

Außerdem ist es vorteilhaft, durch die Einbindung eines Rohstoffmodells in das Trocknungsmodell die maximale Trockengeschwindigkeit und deren Abhängigkeit von der Temperatur für eine vorgegebene Produktionsgeometrie und für einen oder mehrere Trockenabschnitte zu ermitteln, wobei das Rohstoffmodell bei gegebenem Rohstoff mindestens die Abhängigkeit der Trockengeschwindigkeit von der Geometrie und/oder von der Temperatur im ersten Trocknungsabschnitt enthält.

Weitere Verfahrensschritte sowie vorrichtungstechnische Maßnahmen zur Anwendung dieses Verfahrens ergeben sich aus den weiteren Ansprüchen.

Das erfindungsgemäße Steuerungsverfahren besteht demnach aus einem Bündel von einzelnen Verfahrensschritten, die sowohl den Energieverbrauch des Trockners selbst als auch den Energieverbund mit dem Tunnelofen betreffen.

Kernstück des Verfahrens ist aber die flexible Trockenablaufsteuerung mit rechnerischer Verfolgung des Trockenfortschritts in den Kammern bzw. in dem Trockentunnel.

Der Zusammenhang zwischen der Trockengeschwindigkeit und den Luftzustandsgrößen ist der Struktur nach für den ersten und zweiten Trockenabschnitt bekannt.

Damit dieses mathematische Modell automatisch an den jeweiligen Betriebszustand angepaßt werden kann, wird es adaptiv ausgeführt, d. h. es wird anhand der gemessenen Luftzustands- und Volumenstromwerte mit dem realen Trockner abgeglichen.Damit ist sowohleine begleitende Verfolgung des Austrockungszustandes z. B. bei einer ungesteuerten Kammer als auch eine vorausschauende Abschätzung des Energie- und Luftbedarfes bei vorgegebenem Trockenprogramm und Trocknerbelegung möglich.

Die Einbindung eines Rohstoffmodells in das Steuerungskonzept erlaubt eine automatische energieoptimale Anpassung von Trockenkurven unter Berücksichtigung der Rohstoffgrenzwerte, wie maximale Trockengeschwindigkeit und deren Abhängigkeit von der Temperatur. Dieses Rohstoffmodell kann reduziert sein auf Korrekturwerte bzw. Korrekturfunktionen für die zulässige Trockengeschwindigkeit im ersten Trockenabschnitt.

Der erste Abschnitt ist wichtig, da hier bereits der erste steuerungstechnische Ansatz liegt: Bei jeder Formlingstemperatur ist ein spezifischer Anfangsluftzustand optimal. Zunächst muß nämlich die temperaturabhängige maximale Trockengeschwindigkeit berücksichtigt werden. Diese hängt bei konstanter Strömungsgeschwindigkeit in erster Näherung linear von der Dampfdruckdifferenz zwischen Formlingsoberfläche und Luft ab.

Bei dem derzeit üblichen festen, also formlingstemperaturunabhängigen Anfangswert des Luftzustands wird entweder bei höherer als angenommener Formlingstemperatur ein zu niedriger Sättigungsgrad der Luft und eine zu niedrige Trockengeschwindigkeit erreicht oder bei niedrigerer Formlingstemperatur eine zu hohe Trockengeschwindigkeit bzw. sogar eine Kondensation an den Formlingen. Eine automatische Anpassung des Luftzustandes an die Formlingstemperatur ist also sowohl für den thermischen Wirkungsgrad als auch für die Trockengeschwindigkeit von Bedeutung.

Allerdings ist es schwierig, die Formlingstemperatur direkt zu messen. Daher wird im erfindungsgemäßen Steuerungsverfahren die Kammer bzw. der Abschnitt mit den frisch beladenen Formlingen für eine bestimmte Zeit ohne Wärmezufuhr nur mit der Umwälzung betrieben und die Gleichgewichtstemperatur der Luft gemessen. Diese ist näherungsweise gleich der mittleren Formlingstemperatur. Ein Korrekturfaktor, der die Streuung und die Vortemperatur der Kammerwände berücksichtigt, kann die Messung ergänzen.

Bei vorgegebener Trockenzeit berechnet das Steuerungssystem unter Berücksichtigung der maximalen Trockengeschwindigkeit die hieraus mögliche kürzeste Trockenzeit. In erster Näherung kann hierfür beim ersten Trockenabschnitt (feuchte Formlingsoberfläche) das Integral der Partialdruckdifferenz über die Zeit als Verdampfungsleistung oder ein genaueres Wärme- und Stoffübergangsmodell verwendet werden.

Für den zweiten Trockenabschnitt gilt als Näherung ein exponentieller Abfall der Trockengeschwindigkeit bei gleichem Luftzustand, die gegebenenfalls durch den Temperaturverlauf am Fomling korrigiert werden kann. Auch hier sind zur Erfassung der Formlingstemperatur eine oder mehrere Phasen ohne Energiezufuhr hilfreich, um über die Lufttemperatur die Formlingstemperatur zu schätzen.

Die aus der erfahrungsbasierten Modellrechnung ermittelte kürzeste Trockenzeit ist normalerweise nicht identisch mit der Laufzeit der Kammer bis zur Entladung. Diese Zeitreserve soll nun in ein möglichst energiegünstiges Trockenprogramm eingearbeitet werden.

Dabei sind zwei Gesichtspunkte zu berücksichtigen: Nicht alle Trockenabschnitte weisen den gleichen spezifischen Energiebedarf auf. So steigt der thermische Energiebedarf zum Trocknungsende hin stark an. Durch das erfindungsgemäße Steuerungsverfahren wird durch Simulationsläufe der für die verfügbare Zeit günstigste Trockenverlauf berechnet, wobei die verfügbare Zeit unter Konstanthaltung der Gesamttrockenleistung zur Reduzierung Trockenphasen mit dem ungünstigsten thermischen Wirkungsgrad eingesetzt werden.

Andererseits ist auch der elektrische Energiebedarf ein erheblicher Kostenfaktor. Auch die als Umwälzleisutng verfügbare elektrische Leistung wird durch das vorschlagsgemäße Steuerungsverfahren berücksichtigt. Die Umwälzleistung geht nämlich als Strömungsgeschwindigkeit bzw. als Wärme- bzw. Stoffübergangskoeffizient in die Trocknungsgeschwindigkeit ein. Bei geringerer erforderlicher Trocknungsgeschwindigkeit kann also entweder die Dampfdruckpartialdruckdifferenz oder die Strömungsgeschwindigkeit oder beides vermindert werden. Dabei führt die Verminderung der Strömungsgeschwindigkeit zu einer größeren Ungleichmäßigkeit der Austrocknung in der Kammer, was einen zusätzlichen Zeitbedarf erfordert. Dies muß das genauere Trocknermodell berücksichtigen.

Das Steuerungsverfahren enthält daher ein Modul, der bei vorgegebenen Energiepreisen für Wärme und Strom das optimale Verhältnis von Wärme- und Stromeinsatz ermittelt und bei vorgegebener Trocknerleistung und Trockenzeit das dafür richtige Trockenprogramm berechnet.

Als Hilfsgröße zur Erkennung des Trockenfortschritts und damit zur Modellkorrektur sieht das Steuerungsverfahren eine optimale Leitfähigkeitsmessung vor, die den Strom zwischen zwei Metallplatten mißt, auf denen die Formlinge liegen, und die selbst auf einer voneinander isolierten aber zur Latte hin leitenden Metallauflage liegen. Damit kann das Abtrocknen der Oberfläche und damit das Ende des ersten Trockenabschnitts sicher erkannt werden.

Diese Steuerungsstrategie erfordert eine Anpassung der Umwälzleistung an die jeweilige Betriebssitutation. Man könnte dies durch Anpassung der Volumenströme über Klappen oder die Ventilatordrehzahl bewerkstelligen. Das hätte allerdings den Nachteil,daß das Strömungsprofil und die Reichweite sich mit der Leistung verändern. Daher ist es - auch aus Kostengründen - sinnvoller, die Umwälzlüfter zu schalten und ihre relative Einschaltdauer zu variieren.

Um eine noch bessere Homogenität zu erreichen, insbesondere keine Pausen ohne jede Konvektion, ist des weiteren eine sequentielle Schaltung der einzelnen Umwälzlüfter vorgesehen. Durch Korrekturfaktoren der Einschaltdauer für die einzelnen Lüfter kann eine weitere Optimierung des elektrischen Energieverbrauchs erreicht werden.

Damit läßt das Steuerungsverfahren beispielswiese mit fortschreitender Austrockung eine schrittweise Verminderung der Konvektion zu.

Da die verfügbare Ofenabwärme nicht immer bekannt ist, muß sie durch das Steuerungsverfahren ermittelt werden. Dazu wird zunächst der Druck und gegebenenfalls auch die Temperatur in der Heißluftleitung auf einem festen Wert gehalten.

Am Wochenende werden die Kammern des Trockners in ihrer Steuerung durch das Steuerungssystem automatisch von Innenbeheizung auf Außenbeheizung umkonfiguriert. Vom Betriebspersonal wird in einer Prioritätsliste festgelegt, welche Prioritäten für die einzelnen Kammern in der Reihenfolge ihrer Fertigtrocknung gelten sollen. Weiterhin wird durch eine Codierung der Produkte festgelegt, ob eine Antrocknungsphase oder eine Mindestbeaufschlagung mit Warmluft erforderlich ist. Dieser Mindestbeaufschlagung ist ein spezielles Warteprogramm zugeordnet, das vom Steuerungssystem gestartet wird. Auch hier kann eine Abstimmung von Luftzustand und Konvektion mit dem Ziel der Energieoptimierung vorgesehen werden.

Das System stellt nun zuerst diese Mindestversorgung sicher. Dann erhält die am höchsten priorisierte Kammer des Trockners eine Freigabe des energieoptimierten Programms, dann die Kammer mit der nächsthöchsten Priorität, usw.

Bei einer der folgenden Kammern wird nun die Heißluftmenge nicht mehr ausreichen und der Druck auf der Heißluftleitung sinken. Sobald das System dies erkennt, wird das Programm dieser Kammer abgebrochen. Das Steuersystem verwendet nun die Heißluftklappen dieser Kammer als Stellglied in einem Druckregelkreis für die Heißluft. Die Kammer selbst wird bezüglich ihres Luftzustands nicht geregelt, aber bezüglich ihres Austrocknungsgrades durch das Trocknermodell verfolgt. Erreicht der Luftzustand den Wert, der dem regulären Trockenprogramm entspricht, so setzt dieses auf der dem Trocknungsgrad äquivalenten Trockenzeit auf und arbeitet auf dem regulären Programm weiter, das für eine Höchsttrockenzeit energieoptimiert ist. Die nun überschüssige Heißluft wird in die nächstpriorisierte Kammer geleitet, die nun als Stellglied für die Heißluft-Druckregelung fungiert. Dies geschieht nun so lange, bis auch für diese Kammer genug Wärme verfügbar ist. Auch die gegenläufige Bewegung ist möglich, daß also die niedrigspriorisierte geregelte Kammer wieder in einen ungeregelten Zustand zurückkehren muß, weil das Wärmeangebot vom Tunnelofen sich reduziert hat.

In jedem Fall verfolgt das Trocknermodell den Trockenzustand, so daß bei genügendem Wärmeangebot die Kammer auf der äquivalenten Trockenzeit des regulären Programms aufsetzt.

Wird mittels des Steuerungssystems festgestellt, daß das Wärmeangebot nicht ausreicht, um die vorgesehenen Fertigtrocknungstermine zu erreichen, so schaltet es einen Zusatzbrenner ein oder die betreffenden Kammern auf Innenbeheizung um. Das Steuerungssystem ist in der Lage, innenbeheizte Kammern modulierend von Außen- auf Innenheizung und zurück umzukonfigurieren und Kammern in ihrer Luftzufuhr von außen zu begrenzen, so daß der Druck in der Heißluftleitung aufrecht erhalten wird. Es ist auch in der Lage, den Wärmebedarf des Trockners z. B. am Wochenende an das Angebot des Tunnelofens in der Weise anzupassen, daß Kammern mit Innenheizung ab einem erforderlichen Zeitpunkt auf Außenheizung umgestellt, also umkonfiguriert und mit einem äquivalenten Programm weiterbetrieben werden.

Das Steuerungssystem kann bei bekanntem Produktionsprogramm den Verlauf des Energiebedarfs für den Trockner vorausschätzen. Wird in das Steuerungssystem ein Modell des Tunnelofens eingebunden, so läßt sich der Verlauf des Energieangebotes vom Tunnelofen ebenfalls vorausschätzen. Ergibt sich für einen Zeitraum ein Überangebot vom Ofen, so können Bedarf und Angebot innerhalb der vom Betrieb vorgegebenen Produktionstermine angepaßt werden.

Dies kann am Tunnelofen durch Anpassung der Schubzeit und am Trockner durch frühzeitige Umschaltung von Innenauf Außenheizung oder durch Abschaltung des Zusatzbrenners geschehen.

Daneben ist es möglich, durch Veränderung der Kühlzonensteuerung Energie in gewissen Grenzen zu speichern und sie später vermehrt abzuziehen, wenn dies aus der Bedarfskurve möglich ist. Auch die Speicherung von Wärme in heißen Ofenwagen in einem wärmeisolierten Tunnel kann sinnvoll sein. Entscheidend als Randbedingung ist, daß möglichst wenig nicht verwertbare Überschußwärme vom Tunnelofen entsteht.

Ist eine Fahrweise mit Null-Abwärme nicht möglich, so wird mit dem Produktions- oder Betriebsleiter interaktiv eine Änderung der Produktfolge im Trockner und/oder Tunnelofen vorgeschlagen.

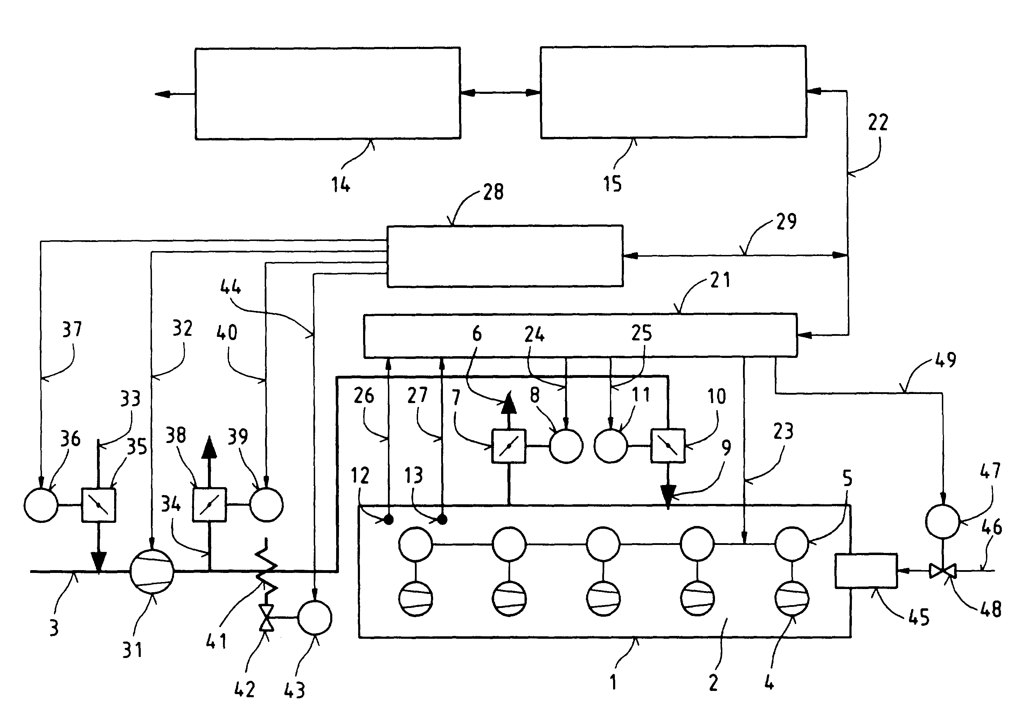

In der Zeichnung ist in einer schematischen Darstellung ein Kammertrockner wiedergegeben, der nach dem erfindungsgemäßen Verfahren betreibbar ist.

Mit 1 ist die Kammer eines Trockners bezeichnet, der mehrere derartige unabhängige Kammern aufweist und in deren Innenräume 2 keramische Formlinge getrocknet werden. Dem Trockner wird dazu von einem nicht gezeigten Tunnelofen ein Heißluftstrom 3 zugeführt. In jede der Kammern 1 gelangt davon ein Teilstrom 9, der über eine durch einen Motor 11 antreibbare Klappe 10 geregelt werden kann. Dieser Teilstrom wird in den einzelnen Kammern, die mit mit jeweils einem Antriebsmotor 5 ausgestatteten Ventilatoren 4 bestückt sind, umgewälzt. Den Kammern 1 kann des weiteren jeweils ein Abluftstrom 6, der mittels einer durch einen Motor 8 antreibbaren Klappe 7 zu regeln ist, entnommen werden. Ferner sind in den einzelnen Kammern 1 des Trockners jeweils ein Feuchtsensor 12 sowie ein Temperatursensor 13 angeordnet.

Dem Trockner ist ein Rechner 15 zugeordnet, der mit einem Rechner 14 des Tunnelofens verknüpft ist. Und an den Rechner 15 ist über eine Steuerleitung 22 je Kammer ein Steuermodul 21 angeschlossen, mit dem über Steuerleitungen 23, 24, 25, 26 und 27 sowohl die Motore 5 der in dem Trockner angeordneten Ventilatoren 4 als auch die den Regelklappen 7 und 10 zugeordneten Motore 8 bzw. 11 als auch die Feuchte- und Temperatursensoren 12 bzw. 13 angeschlossen sind. Mittels des Steuermoduls 21 ist es somit möglich, den Verlauf der Luftzustandswerte und der Konvektion der einzelnen Kammern 1 des Trockners und der Produkte in Abhängigkeit von der verfügbaren Trockenzeit und der verfügbaren Ofenabwärme unter dem Gesichtspunkt eines minimalen Gesamtenergie- bzw. Energiekostenaufwandes selbsttätig auszuwählen oder zu berechnen und als Trocknungsprogramm zu steuern.

Die Kammern 1 des Trockners können nicht nur von außen beheizt werden, sondern es ist auch möglich, diese mittels eines Brenners 45 innen zu beheizen. Dem Brenner 45 wird hierbei über eine Leitung 46 Brennstoff zugeführt, in die ein durch einen Motor 47 antreibbares Absperrventil 48 eingesetzt ist. Über eine weitere Steuerleitung 49 ist der Motor 47 des Absperrventils 48 ebenfalls an das Steuermodul 21 angeschlossen, der Brenner 45 kann somit zusammen mit den Regelklappen 7 und/oder 10 sowie den Ventilatoren 4 gesteuert werden.

Auch der dem Trockner zugeführte Heißluftstrom 3 ist steuerbar, und zwar mittels eines Ventilators 31 und/oder durch Zuführung eines Frischluftstromes 33 und/oder durch Abfuhr eines Abluftstromes 34. Dem Frischluftstrom 33 wie auch dem Abluftstrom 34 ist jeweils eine Regelklappe 35 bzw. 38 zugeordnet, deren Antriebsmotore 36 bzw. 39 über Steuerleitungen 37 bzw. 40 an ein weiteres Steuermodul 28 angeschlossen sind, das über eine Steuerleitung 29 mit dem Rechner 15 und dem Steuermodul 21 verknüpft ist. Des weiteren kann der Heißluftstrom 3 durch einen Brenner 41 zusätzlich aufgeheizt werden, dessen Brennstoffzufuhr durch ein Ventil 42 steuerbar ist. Ein an das Ventil 42 angeschlossener Motor 43 ist über eine Steuerleitung 44 mit dem Steuermodul 28 verbunden, ebenso der in dem Heißluftstrom 3 eingesetzte Ventilator 31 über eine Steuerleitung 32, so daß auch die über den Heißluftstrom 3 zugeführte Wärmeenergie in Abhängigkeit von dem Energiebedarf des Trockners steuerbar ist.

## Patentansprüche

1. Verfahren zur Steuerung von Kammertrocknern mit einer vielzahl von Kammern der keramischen Industrie, die mit einer Außen- und/ oder Innenheizung und im Wärmeverbund mit einem Tunnelofen betrieben werden und bei denen durch ein empirisches oder mathematisches Modell des Trockenvorgangs der Austrocknungszustand einer Kammer näherungsweise bestimmt wird,
gekennzeichnet durch die Verfahrensschritte,
- Messen der Gleichgewichtstemperatur der Luft in jeder Kammer kurz nach der Beladung der Kammer mit Formlingen,
- Berechnen der kürzesten Trockenzeit unter Berücksichtigung der maximalen Trockengeschwindigkeit der Formlinge,
- Starten des Trocknungsprogrammes für jede einzelne Kammer,
- selbsttätiges Auswählen oder Berechnen des Trocknungsprogrammes unter Berücksichtigung der gemessenen Gleichgewichtstemperatur, der berechneten Trockenzeit und der Konvektionsleistung der einzelnen Kammern in Abhängigkeit von den Formlingen, der verfügbaren Trockenzeit und der verfügbaren Ofenabwärme unter den Gesichtspunkt eines minimalen Gesamtenergie - bzw. EnergieKostenaufwandes.

2. Verfahren nach Anspruch 1,
dadurch gekennzeichnet,
- Berechnung des Austrocknungszustandes jeder Kammer, zumindest näherungsweise, an Hand des empirischen oder physikalisch mathematischen Modells des Trockenvorganges,
- Programmgesteuertes Erstellen eines energetisch optimierten Trocknungsprogrammes bei vorgegebener Ofenabwärme und Trockenzeit unter dem Gesichtspunkt eines minimalen Gesamtenergieaufwandes der Trocknung und/ oder des Gesamtwärmeverbundes von Tunnelofen und Trockner.

3. Verfahren nach Anspruch 1 oder 2,
**dadurch gekennzeichnet,**
daß einem vorgegebenen Produktionsprogramm zuerst der Verlauf des Energiebedarfs für den Trockner und über ein Modell des Tunnelofens der Verlauf des Energieangebotes des Tunnelofens vorausgeschätzt werden und daß daraufhin der Bedarf und das Angebot innerhalb der vom Betrieb vorgegebenen Produktionstermine angepaßt werden.

4. Verfahren nach einem oder mehreren der
Ansprüche 1 bis 3,
**dadurch gekennzeichnet,**
daß durch die Einbindung eines Rohstoffmodells in das Trocknungsmodell die maximale Trockengeschwindigkeit und deren Abhängigkeit von der Temperatur für eine vorgegebene Produktionsgeometrie und für einen oder mehrere Trockenabschnitte ermittelt wird, wobei das Rohstoffmodell bei gegebenem Rohstoff mindestens die Abhängigkeit der Trockengeschwindigkeit von der Geometrie und/oder von der Temperatur im ersten Trocknungsabschnitt enthält.

5. Verfahren nach Anspruch 4,
**dadurch gekennzeichnet,**
daß anhand des Trocknungs- und des Rohstoffmodells der Verlauf der Luftzustands- und Konvektionswerte bei maximal rohstoffseitig zulässiger bzw. verfahrenstechnisch möglicher Trocknungsgeschwindigkeit abgeleitet wird.

6. Verfahren nach einem oder mehreren der
Ansprüche 1 bis 5,
**dadurch gekennzeichnet,**
daß die Ermittlung des energieoptimalen Verlaufs der Luftzustands- und/oder Konvektionswerte der einzelnen Kammern durch Ermittlung der optimalen Extremtrockenzeiten, d.i. der kürzestmöglichen und längsten energieoptimalen Trockenzeit unter vorzugsweise linearer Interpolation der Luftzustands- und/oder Konvektionswerte, erfolgt.

7. Verfahren nach einem oder mehreren der
Ansprüche 1 bis 6,
**dadurch gekennzeichnet,**
daß aus einer Auswahl von voroptimierten Trockungsprogrammen das jeweils günstigste ausgewählt wird.

8. Verfahren nach einem oder mehreren der
Ansprüche 1 bis 7,
**dadurch gekennzeichnet,**
daß zur Ermittlung der energiegünstigsten Trockenkurve die Formlingstemperatur einbezogen wird.

9. Verfahren nach Anspruch 8,
**dadurch gekennzeichnet,**
daß zur Erfassung der Formlingstemperatur die Kammer für eine zur Bestimmung des Gleichgewichtszustandes ausreichende Zeit ohne Wärmezufuhr nur mit der Umwälzung betrieben und die Gleichgewichtstempertur der Luft bestimmt wird und daß diese direkt oder mit einem Korrekturfaktor, der die Streuung der Formlingstemperaturen und den Verlauf der Temperatur vor der Beladung berücksichtigt, beaufschlagt wird.

10. Verfahren nach einem oder mehreren der
Ansprüche 1 bis 9,
**dadurch gekennzeichnet,**
daß als Hilfsgröße zur Erkennung bzw. Überprüfung des Trockenfortschritts, insbesondere zur Erkennung des Endes des ersten Trockenabschnitts, eine Leitfähigkeitsmessung vorgenommen wird, in dem der Strom zwischen zwei Metallträgern, auf denen Formlinge liegen, gemessen wird.

11. Verfahren nach Anspruch 10,
**dadurch gekennzeichnet,**
daß als Hilfsgröße zur Erkennung bzw. Überprüfung des Trockenfortschritts, insbesondere zur Erkennung des Endes des zweiten Trockenabschnitte, die Formlingstemperatur verwendet wird.

12. Verfahren nach einem oder mehreren der
Ansprüche 1 bis 11,
**dadurch gekennzeichnet,**
daß die zu erreichende Endfeuchte produktabhängig vorgegeben wird.

13. Verfahren nach einem oder mehreren der
Ansprüche 1 bis 12,
**dadurch gekennzeichnet,**
daß abhängig von der Abweichung von vorgegebenem und tatsächlichem Austrockungsgrad das Trocknungsprogramm selbsttätig korrigiert wird.

14. Verfahren nach einem oder mehreren der Ansprüche 1 bis 13,
**dadurch gekennzeichnet,**
daß nach einem festen produktionsabhängigen bzw. ofenabwärmeabhängigen Zeitplan die Kammern durch das Steuerungssystem automatisch von Innenbeheizung auf Außenbeheizung umgestellt werden.

15. Verfahren nach einem oder mehreren der Ansprüche 1 bis 14,
**dadurch gekennzeichnet,**
daß eine synchrone Schaltung der Luft- und/oder Energiezufuhr zu in dem Trockner angeordneten Umwälzlüftern mit ihrer Einschaltung erfolgt.

16. Verfahren nach einem oder mehreren der Ansprüche 1 bis 15,
**dadurch gekennzeichnet,**
daß der Druck auf der Heißluftleitung als Kriterium dafür verwendet wird, ob das Wärmeangebot des Tunnelofens dem Bedarf des Trockners entspricht.

17. Verfahren nach einem oder mehreren der Ansprüche 1 bis 16,
**dadurch gekennzeichnet,**
daß die für eine programmgemäße Versorgung nicht mehr ausreichende Heißluft vom Ofen der nächstpriorisierten noch nicht gestarteten Kammer zugeführt wird und deren Heißluftklappe als Stellglied in einem Druckregelkreis für die zentrale Heißluftversorgung verwendet wird.

18. Verfahren nach einem oder mehreren der
Ansprüche 1 bis 17,
**dadurch gekennzeichnet,**
daß die Ermittlung des kostenoptimalen Verlaufs von Dampfdruckpartialdifferenz und mittlerer Strömungsgeschwindigkeit durch deterministische Rechnung oder durch Simulationsläufe mit einer Optimierungsstrategie erfolgt und zur Erstellung des Trocknungsprogramms verwendet wird.

19. Verfahren nach einem oder mehreren der
Ansprüche 1 bis 18,
**dadurch gekennzeichnet,**
daß die bezüglich ihres Luftzustandes nicht geregelte Kammer in ihrem Austrocknungsgrad durch das Trocknermodell verfolgt wird und bei Erreichen einer Energieversorgung, die das reguläre Trockenprogramm zuläßt, auf der dem Trocknungsgrad äquivalenten Trockenzeit aufsetzt und sodann nach dem Trockenprogramm weiterarbeitet.

20. Verfahren nach einem oder mehreren der
Ansprüche 1 bis 19,
**dadurch gekennzeichnet,**
daß die niedrigstpriorisierte programmgeregelte Kammer in einen ungeregelten Zustand zurückgeführt wird, sobald bei Verschiebung des Wärmeangebotes bzw. des Bedarfs das Energieangebot für das reguläre Programm nicht mehr ausreicht.

21. Verfahren nach einem oder mehreren der
Ansprüche 1 bis 20,
**dadurch gekennzeichnet,**
daß bei für die vorgegebene Trockenzeit unzureichendem Wärmeangebot ein Zusatzbrenner ein- oder die betreffende Kammer auf Innenbeheizung umgeschaltet werden.

22. Verfahren nach einem oder mehreren der
Ansprüche 1 bis 21,
**dadurch gekennzeichnet,**
daß die Umschaltung der Kammern von Außen- auf Innenheizung unter Auswahl der günstigsten spezifischen Wärmeverbauchs oder nach einem festen Zeitplan erfolgt.

23. Verfahren nach einem oder mehreren der Ansprüche 1 bis 22,
**dadurch gekennzeichnet,**
daß bei Überangebot von Wärme vom Tunnelofen vorzugsweise die im zweiten Trockenabschnitt befindlichen Kammern mit überschüssiger Wärme versorgt werden und unter Berücksichtigung des Fertigtrocknungstermins die mittlere Strömungsgeschwindigkeit entsprechend reduziert wird.

24. Verfahren nach einem oder mehreren der Ansprüche 1 bis 23,
**dadurch gekennzeichnet,**
daß die Anpassung des Wärmeangebots vom Ofen durch Veränderung der Schubzeit vorgenommen wird.

25. Verfahren nach einem oder mehreren der Ansprüche 1 bis 24,
**dadurch gekennzeichnet,**
daß die Anpassung des Wärmebedarfs am Trockner durch Umschaltung von Innen- auf Außenbeheizung und/oder durch Abschaltung des Zusatzbrenners erfolgt.

26. Verfahren nach einem oder mehreren der Ansprüche 1 bis 25,
**dadurch gekennzeichnet,**
daß durch Veränderung der Kühlzonensollwerte am Tunnelofen Energie gespeichert und später abgezogen wird.

27. Verfahren nach Anspruch 26,
**dadurch gekennzeichnet,**
daß die Speicherung von Wärme im heißen Ofenwagen in einem wärmeisolierten Tunnel erfolgt.

28. Verfahren nach einem oder mehreren der
Ansprüche 1 bis 27,
**dadurch gekennzeichnet,**
daß bei nicht vermeidbarer Abwärme eine kostenoptimierte Änderung der Produktfolge im Trockner und/oder im Tunnelofen vorgeschlagen wird.

## Claims

1. A method for controlling chamber dryers with a multiplicity of chambers used in the ceramics industry, which are operated with an external and/or internal heating system and in association with the heating system of a tunnel kiln, and in which the drying status of a chamber is determined in an approximate fashion by means of an empirical or mathematical model of the drying process,
characterised by the following process steps:
- measurement of the equilibrium temperature of the air in each chamber shortly after the chamber has been loaded with green bricks,
- calculation of the shortest drying time taking account of the maximum drying speed of the green bricks,
- commencement of the drying program for each individual chamber,
- automatic selection or calculation of the drying program with consideration for the measured equilibrium temperature, the calculated drying time and/or the convection power of the individual chambers depending on the green bricks, the available drying time and the available waste heat from the kiln from the point of view of achieving a minimum overall energy/energy cost expenditure.

2. The method in accordance with Claim 1,
**characterised in that,**
- calculation of the drying status of each chamber, at least to an approximate degree, by means of the empirical or physical mathematical model of the drying process,
- creation (under program control) of a drying program with optimised energy characteristics for a given amount of waste kiln heat and a given length of drying time, from the point of view of reducing the overall energy expenditure for drying and/or the combined energy consumed by the tunnel kiln and the dryer.

3. The method in accordance with Claim 1 or 2,
**characterised in that,**
a specified production program is first used for predicting the variations in the energy demand of the dryer and the variations in the heat output from the tunnel kiln are predicted by means of a model of the tunnel kiln and that the demand and the output are then adapted within the production deadlines specified by the company.

4. The method in accordance with one or more of Claims 1 to 3,
**characterised in that,**
a raw material model is incorporated into the drying model in order to determine the maximum drying speed and the dependence of this speed on the temperature for a specified production geometry and for one or more drying sections, in which the raw material model for a given raw material at least includes the dependency of the drying speed on the geometry and/or on the temperature in the first drying section.

5. The method in accordance Claim 4,
**characterised in that,**
the drying and the raw material models are used for deriving the variations in the air status and convection values at the maximum drying speed permitted for the raw material or the maximum drying speed which can be achieved by the process.

6. The method in accordance with one or more of Claims 1 to 5,
**characterised in that,**
the variations in the air status and/or convection values in the individual chambers for achieving the optimum energy characteristics are determined by establishing the optimum extreme drying times, i.e. the shortest and longest possible drying times under optimum energy conditions, preferably by means of a linear interpolation of the air status and/or convection values.

7. The method in accordance with one or more of Claims 1 to 6,
**characterised in that**,
the most favourable drying program is selected from a number of pre-optimised drying programs.

8. The method in accordance with one or more of Claims 1 to 8,
**characterised in that,**
the green brick temperature is included in the process of determining the energy curve with the most favourable energy characteristics.

9. The method in accordance with Claim 8,
**characterised in that,**
in order to determine the temperature of the green bricks, the chamber is operated only with circulation and without any heat input for a long enough time to establish the status of equilibrium, at which point the equilibrium temperature of the air is measured and this value is used directly or with a correction factor to take account of the fluctuations in the temperatures of the green bricks and the temperature variations prior to charging.

10. The method in accordance with one or more of Claims 1 to 9,
**characterised in that,**
a conductivity measurement is taken as a secondary parameter for detecting or checking the process of drying, in particular for detecting the end of the first stage of drying, with this measurement involving a measurement of the current between two metal carriers upon which green bricks are placed.

11. The method in accordance with Claim 10,
**characterised in that,**
the temperature of the green bricks is taken as a secondary parameter for detecting or checking the process of drying, in particular for detecting the end of the second stage of drying

12. The method in accordance with one or more of Claims 1 to 11,
**characterised in that,**
the final moisture content to be achieved is specified according to the product.

13. The method in accordance with one or more of Claims 1 to 12,
**characterised in that,**
the drying program is automatically corrected depending on the deviation between the specified and the actual degrees of drying.

14. The method in accordance with one or more of Claims 1 to 13,
**characterised in that,**
the control system automatically changes the chambers over from internal heating to external heating in accordance with a timetable which is fixed in accordance with production or the waste heat from the kiln.

15. The method in accordance with one or more of Claims 1 to 14,
**characterised in that,**
the air and/or energy supply to the recirculation fans arranged in the dryer is switched in synchronism with the activation of the fans.

16. The method in accordance with one or more of Claims 1 to 15,
**characterised in that,**
the pressure on the hot air line is taken as a criterion for whether the heat supplied from the tunnel kiln corresponds to that consumed by the dryer.

17. The method in accordance with one or more of Claims 1 to 16,
**characterised in that,**
if the heating air is insufficient to provide a supply in accordance with the program, heating air is supplied from the chamber with the next priority which has not yet been started and the hot air flap of this chamber is used as the actuator in a closed-loop pressure control circuit for the central hot air supply.

18. The method in accordance with one or more of Claims 1 to 17,
**characterised in that,**
the variations in the partial steam pressure differential and the average speed of flow which give the optimum cost situation are established by a deterministic calculation or by simulation runs using an optimisation strategy and these variations are used for setting up the drying program.

19. The method in accordance with one or more of Claims 1 to 18,
**characterised in that,**
the chamber which does not have its air status controlled has its degree of drying tracked by the dryer model and, upon attaining a level of energy supply which permits the regular drying program to be used, applies the drying time equivalent to the degree of drying and then continues working according to the drying program.

20. The method in accordance with one or more of Claims 1 to 19,
**characterised in that,**
the chamber subject to program control with the lowest priority is returned to an unregulated status as soon as the energy supply for the regular program is no longer sufficient in the event of a shift in the heat supply or in the demand.

21. The method in accordance with one or more of Claims 1 to 20,
**characterised in that,**
in the event that the heat supply is inadequate for the specified drying time, an additional burner is switched on or the chamber in question is switched over to internal heating.

22. The method in accordance with one or more of Claims 1 to 21,
**characterised in that,**
changing over the chambers from external to internal heating takes place according to the selection of which would result in the most favourable specific heat consumption or in accordance with a fixed timetable.

23. The method in accordance with one or more of Claims 1 to 22,
**characterised in that,**
in the event of a heat surplus from the tunnel kiln, the chambers in the second drying section are preferably supplied with the surplus heat and the average speed of flow is reduced accordingly with consideration for the time when the drying has to be finished.

24. The method in accordance with one or more of Claims 1 to 23,
**characterised in that,**
the heat supplied by the kiln is adapted by altering the thrust time.

25. The method in accordance with one or more of Claims 1 to 24,
**characterised in that,**
the heat demand at the dryer is adapted by changing over from internal to external heating and/or by switching off the additional burner.

26. The method in accordance with one or more of Claims 1 to 25,
**characterised in that,**
energy is stored and used subsequently by changing the cooling zone rated values on the tunnel kiln.

27. The method in accordance with Claim 26,
**characterised in that,**
heat is stored in hot kiln carriages in a tunnel with thermal insulation.

28. The method in accordance with one or more of Claims 1 to 27,
**characterised in that,**
when it is impossible to avoid having waste heat, a change in the product sequence for the dryer and/or in the tunnel kiln is proposed which will result in an optimisation of costs.

## Revendications

1. Procédé pour commander des sécheurs à chambres comprenant une multitude de chambres dans l'industrie céramique, utilisés en rapport avec un chauffage extérieur et/ou intérieur et en combinaison thermique avec un four tunnel, dans lequel l'état de séchage d'une chambre est calculé en approximation à l'aide d'un modèle empirique ou mathématique du procédé de séchage,
caractérisé par les phases de procédé suivantes:
- mesure de la température d'équilibre de l'air de chaque chambre peu après le remplissage de la chambre avec des briques crues,
- calcul de la durée de séchage la plus courte en tenant compte de la vitesse de séchage maxi des briques crues,
- lancement du programme de séchage pour chaque chambre individuelle,
- sélection ou calcul automatiques du programme de séchage en tenant compte de la température d'équilibre mesurée, du temps de séchage calculé et/ou de la puissance de convection des chambres individuelles en dépendance des briques crues, de la durée de séchage et de l'évacuation de chaleur du four disponibles, et face à une réduction maximale des coûts de l'énergie employée.

2. Procédé d'après la revendication 1,
caractérisé par ce que qui suit:
- calcul du degré de séchage de chaque chambre, au moins en approximation, moyennant un modèle empirique ou physiko-mathématique du procédé de séchage,
- mise au point, à programmation commandée, d'un programme de séchage optimisé du point de vue énergétique, basée sur l'évacuation de chaleur du four et de la durée de séchage, face à une réduction maximale des coûts de l'énergie employée pour le séchage et/ou de la combinaison de chaleur totale du four tunnel et du sécheur.

3. Procédé d'après les revendications 1 ou 2,
caractérisé en ce que,
devant l'arrière-plan d'un programme de fabrication donné, il est d'abord estimé l'évolution du besoin d'énergie du sécheur, et, moyennant un modèle du four tunnel, l'évolution de l'offre d'énergie du four tunnel, et qu'ensuite, le besoin et l'offre sont adaptés en dépendance des délais de fabrication exigés par l'usine.

4. Procédé d'après une ou plusieurs des revendications 1 à 3,
caractérisé en ce que,
en intégrant un modèle du matériau brut dans le modèle de séchage, il est déterminé la vitesse de séchage maxi et sa dépendance de la température pour un profil de fabrication prédéterminé et pour une ou plusieurs phases de séchage, le modèle du matériau brut pour un matériau brut donné contenant au moins la dépendance de la vitesse de séchage du profil et/ou de la température de la première phase de séchage.

5. Procédé d'après la revendications 4,
caractérisé en ce que,
à l'aide du modèle de séchage et du matériau brut, il est déduit l'évolution des valeurs de l'état d'air et de convection en fonction de la vitesse de séchage maxi permise par le matériau brut ou par la technologie des procédés.

6. Procédé d'après une ou plusieurs des revendications 1 à 5,
caractérisé en ce que
la détermination de l'évolution de l'état d'air et/ou des valeurs de convection des chambres individuelles en vue de l'optimum énergétique se fait par l'intermédiaire de la détermination des vitesses de séchage extrêmes optimales, c.-à-d. des vitesses de séchage les plus courtes et les plus longues possibles en vue de l'optimum énergétique, tout en effectuant une interpolation de préférence linéaire des valeurs de l'état d'air et de convection.

7. Procédé d'après une ou plusieurs des revendications 1 à 6,
caractérisé en ce
qu'il est choisi le programme optimal parmi un certain nombre de programmes de séchage optimisés à l'avance.

8. Procédé d'après une ou plusieurs des revendications 1 à 7,
caractérisé en ce que
pour déterminer la courbe de séchage optimale du point de vue énergie, il est intégré la température de la brique crue.

9. Procédé d'après la revendication 8,
caractérisé en ce que
pour déterminer la température de la brique crue, la chambre fonctionne, pendant un temps suffisant pour identifier l'état d'équilibre, sans apport de chaleur et exclusivement avec circulation d'air, qu'il est déterminé la température d'équilibre de l'air et que celui-ci est apporté soit directement soit avec un facteur de correction tenant compte de la dispersion des températures des briques crues ainsi que de l'évolution de la température avant le remplissage.

10. Procédé d'après une ou plusieurs des revendications 1 à 9,
caractérisé en ce que,
en tant que paramètre auxiliaire pour reconnaître ou pour contrôler le progrès du séchage, notamment pour reconnaître la fin de la première phase du séchage, il est déterminé la conductance en mesurant le courant circulant entre deux supports métalliques sur lesquels se trouvent des briques crues.

11. Procédé d'après la revendications 10,
caractérisé en ce que,
en tant que paramètre auxiliaire pour reconnaître ou pour contrôler le progrès du séchage, notamment pour reconnaître la fin de la deuxième phase du séchage, il est utilisé la température de la brique crue.

12. Procédé d'après une ou plusieurs des revendications 1 à 11,
caractérisé en ce que
l'humidité finale à atteindre est déterminée à l'avance en dépendance du produit.

13. Procédé d'après une ou plusieurs des revendications 1 à 12,
caractérisé en ce que
le programme de séchage est corrigé automatiquement en fonction de la déviation entre le degré de séchage prédéterminé et le degré de séchage effectivement réalisé.

14. Procédé d'après une ou plusieurs des revendications 1 à 13,
caractérisé en ce que,
en fonction d'un planning fixe dépendant de la fabrication ou de la dissipation de chaleur, le système de commande des chambres passe automatiquement du chauffage intérieur au chauffage extérieur.

15. Procédé d'après une ou plusieurs des revendications 1 à 14,
caractérisé en ce
qu'avec la mise en service des ventilateurs de circulation disposés dans le sécheur, il est effectué la commande simultanée de l'apport d'air et/ou d'énergie.

16. Procédé d'après une ou plusieurs des revendications 1 à 15,
caractérisé en ce que
la pression de la conduite d'air chaud est utilisée en tant que critère déterminant si l'offre de chaleur du four tunnel correspond au besoin du sécheur.

17. Procédé d'après une ou plusieurs des revendications 1 à 16,
caractérisé en ce que
l'air chaud ne suffisant plus pour l'alimentation programmée est fourni par le four de la chambre non encore activée et suivant dans l'ordre de priorité et que son clapet d'air chaud est utilisé en tant qu'actuateur dans un circuit de réglage de pression pour l'alimentation centralisée d'air chaud.

18. Procédé d'après une ou plusieurs des revendications 1 à 17,
caractérisé en ce que
la détermination de l'évolution optimale de la différence partielle de la pression de vapeur et de la vitesse de flux moyenne en vue des coûts se fait par calcul déterministe ou par marches de simulation avec stratégie d'optimisation et qu'elle soit utilisée pour la mise au point d'un programme de séchage.

19. Procédé d'après une ou plusieurs des revendications 1 à 18,
caractérisé en ce que
le degré de séchage de la chambre dont l'état de l'air n'est pas encore réglé, est suivi par le modèle de séchage et que, à l'atteinte d'une alimentation d'énergie qui permet le programme de séchage normal, celui-ci se superpose à la durée de séchage équivalente au degré de séchage et continue ensuite à marcher selon le programme de séchage normal.

20. Procédé d'après une ou plusieurs des revendications 1 à 19,
caractérisé en ce que
la chambre à commande programmée dont la priorité est la plus basse, soit ramenée en état non réglé dès que par le changement de l'offre de chaleur ou du besoin, l'offre d'énergie ne suffit plus pour le programme régulier.

21. Procédé d'après une ou plusieurs des revendications 1 à 20,
caractérisé en ce que,
en cas d'insuffisance de l'offre de chaleur face à la durée de séchage prédéterminée, il est soit mise en marche un four supplémentaire soit commutée la chambre correspondant sur chauffage intérieur.

22. Procédé d'après une ou plusieurs des revendications 1 à 21,
caractérisé en ce que
la commutation des chambres du chauffage extérieur sur chauffage intérieur se fait en sélectionnant la consommation spécifique de chaleur la plus favorable ou selon un planning fixe.

23. Procédé d'après une ou plusieurs des revendications 1 à 22,
caractérisé en ce que,
en cas d'offre excédentaire de chaleur provenant du four tunnel ce sont de préférence les chambres de la deuxième phase de séchage qui reçoivent la chaleur excédentaire et que la vitesse de flux moyenne soit réduite en tenant compte de la fin du séchage prévu.

24. Procédé d'après une ou plusieurs des revendications 1 à 23,
caractérisé en ce que
l'adaptation de l'offre de chaleur du four se fait par le réglage de la vitesse d'avance.

25. Procédé d'après une ou plusieurs des revendications 1 à 24,
caractérisé en ce que
l'adaptation du besoin de chaleur du sécheur se fait par commutation de chauffage intérieur sur chauffage extérieur et/ou par la mise hors service du four supplémentaire.

26. Procédé d'après une ou plusieurs des revendications 1 à 25,
caractérisé en ce que
par la modification des valeurs de consigne des zones de refroidissement, il est accumulé de l'énergie utilisée ultérieurement.

27. Procédé d'après une ou plusieurs des revendications 1 à 26,
caractérisé en ce que
l'accumulation d'énergie dans le chariot chaud du four ait lieu à l'intérieur d'un tunnel calorifugé.

28. Procédé d'après une ou plusieurs des revendications 1 à 27,
caractérisé en ce que,
en cas de dissipation inévitable de chaleur, il est proposé pour le sécheur et/ou le four tunnel un changement de la séquence de fabrication tenant compte d'une optimisation des coûts.
